# EUROPÄISCHE PATENTSCHRIFT

(11) **EP 0 411 278 B1**
(45) Veröffentlichungstag und Bekanntmachung des Hinweises auf die Patenterteilung: **13.10.1993**
(21) Anmeldenummer: 90110664.1
(22) Anmeldetag: 06.06.1990
(51) Int. Cl.: E21B 7/28, E21B 29/00, E21B 7/26, E21B 7/20, E03F 3/06, F16L 1/00

(54) **Verfahren und Vorrichtung zum Aufbrechen einer erdverlegten Rohrleitung**
Method and apparatus for destroying an underground pipe
Procédé et dispositif pour la destruction d'une conduite enterrée

(30) Priorität: 02.08.1989 JP 199192/89
(43) Veröffentlichungstag der Anmeldung: 06.02.1991
(73) Patentinhaber: TRACTO-TECHNIK PAUL SCHMIDT, MASCHINENFABRIK KG, 57368 Lennestadt (DE)
(72) Erfinder: Koyano, Nobuyuki, Yokosuka City Kanagawa Pref. (JP); Ishii, Katsumi, Tokyo (JP); Hesse, Alfons, Dipl.-Ing:, D-5940 Lennestadt 11 (DE)
(74) Vertreter: König, Reimar, Dr.-Ing.

(56) Entgegenhaltungen:
- EP-A- 0 053 480
- EP-A- 0 216 100
- EP-A- 0 342 246
- EP-A- 0 368 079
- DE-A- 3 603 238
- DE-A- 3 620 026
- DE-C- 3 813 767
- DE-C- 3 832 214
- DE-C- 3 902 081
- DE-C- 3 903 864
- DE-U- 8 605 543
- GB-A- 2 138 532
- US-A- 1 546 630
- US-A- 3 360 840

## Beschreibung

Die Erfindung betrifft eine Vorrichtung zum Zerstören einer erdverlegten Rohrleitung mittels einer mit nach innen gerichteten Schneidwerkzeugen versehenen, mit einem Vortriebskörper verbundenen, in Vortriebsrichtung vorkragenden Hülse, wie durch die ältere, nachveröffentlichte europäische Offenlegungsschrift 0 368 079 bekanntgeworden.

Aus der europäischen Patentschrift 0 053 480 ist es bekannt, erdverlegte Rohrleitungen grabenlos zu erneuern, indem ein an seiner Gerätespitze mit Schneidmessern bestückter Vortriebskörper durch die erdverlegte Rohrleitung bewegt wird. Die Schneidmesser greifen an der Innenseite an und zerbrechen den Rohrmantel bei der vorwärtsbewegung des Vortriebskörpers durch die Leitung in Rohrscherben, die nach außen in das umgebende Erdreich gedrückt werden. Eine an das rückwärtige Ende des Vortriebskörpers angekuppelte Neuleitung wird gleichzeitig in das Erdreich eingezogen und ersetzt die alte Rohrleitung. Allerdings bereitet das Einpressen der Rohrscherben in das umgebende Erdreich häufig Probleme, insbesondere wenn es sich um größere Bruchstücke handelt; außerdem läßt sich nicht ausschließen, daß die nach außen zur Seite gedrängten, in das umgebende Erdreich gedrückten Rohrscherben die nachgezogene Neuleitung beschädigen.

Schließlich führen kontaminierte, im Erdreich verbleibende Rohrscherben zu einer erheblichen Umweltbelastung.

Aus der deutschen Offenlegungsschrift 36 20 026 ist es bekannt, ein zu sanierendes Kanalisationsrohr mittels eines konstruktiv und maschinell sehr aufwendigen Gerätes zu zerstören, das u.a. einen mit Schneidelementen besetzten Fräskopf und eine Förderschnecke aufweist. Das zu sanierende Rohr wird mittels des Fräskopfes zerfräst. Um zu verhindern, daß sich Rohrscherben in das Erdreich einlagern, werden die dabei entstehenden Rohrscherben mittels der Förderschnecke abtransportiert. Abgesehen von dem großen konstruktiven Aufwand besteht bei diesem Gerät die Gefahr, daß sich größere, nach außen wegbrechende Rohrbruchstücke am Förderschneckeneingang verklemmen und zu einer Betriebsstörung führen.

Schließlich beschreibt die nicht vorveröffentlichte europäische Offenlegungsschrift 0 368 079 ein Gerät zum Zerstören erdverlegter Rohrleitungen mittels eines mit einem Vortriebskörper verbundenen Werkzeugs mit winklig in bezug auf die Rohrachse verlaufenden Schneiden und zwischen den Schneiden befindlichen Durchtrittsöffnungen zu einem in Vortriebsrichtung hinter den Schneiden befindlichen zentrischen Sammelraum zum Abfördern der Rohrscherben. Dieser Sammelraum erfordert mindestens einen peripher an dem Werkzeug angreifenden Vortriebskörper, beispielsweise eine hohlzylindrisch ausgebildete Bodenrakete, durch deren Innenraum die Rohrscherben abgefördert werden. Der konstruktive Aufwand für einen derartigen Vortriebskörper oder auch für mehrere kreisförmig angeordnete Vortriebskörper ist ganz erheblich. Hinzu kommt, daß der für den oder die Vortriebskörper zur Verfügung stehende Raum äußerst begrenzt ist. Das führt angesichts der erforderlichen hohen Vortriebskraft zu weiteren Schwierigkeiten. Hinzu kommt, daß je nach dem Durchmesser der zu zerstörenden Rohrleitung hohlzylindrische Erdraketen mit unterschiedlichem Innen- und Außendurchmesser oder entsprechend unterschiedliche Konstruktionen für die kreisförmige Anordnung mehrerer Vortriebskörper erforderlich sind.

Der Erfindung liegt daher die Aufgabe zugrunde, den konstruktiven Aufwand für den Vortriebskörper wesentlich geringer zu halten und insbesondere auch die Möglichkeit zu schaffen, den Werkzeugvortrieb unabhängig vom Durchmesser des zu zerstörenden Altrohrs mit handelsüblichen Vortriebskörpern beispielsweise Rammbohrgeräten zu bewerkstelligen.

Die Lösung dieser Aufgabe besteht in einer Vorrichtung zum Zerstören einer erdverlegten Rohrleitung mittels eines mit einem Vortriebskörper verbundenen Werkzeugs mit winklig in bezug auf die Rohrachse verlaufenden Schneiden und zwischen den Schneiden befindlichen Durchtrittsöffnungen zu einem in Vortriebsrichtung hinter den Schneiden beginnenden peripheren Sammelraum.

Demgemäß bewegen sich die Rohrscherben bei der erfindungsgemäßen Vorrichtung zumindest zunächst - bezogen auf die zu zerstörende Rohrleitung - nach außen in den Sammelraum. Als Sammelraum eignet sich im einfachsten Falle der ohnehin vorhandene Erdkanal oder ein direkt mit eingezogenes Schutzrohr. Wenn gleichzeitig mit dem Zerstören der Rohrleitung eine Neuleitung eingezogen wird, kann jedoch eine Zertrümmerungshülse mit einem über eine rückwärtige Ringaufnahme angekuppelten neuen Leitungsrohr oder eine angekuppelte Arbeitsleitung einen gegen das Erdreich abgekapselten, die Rohrscherben aufnehmenden Sammelraum bilden.

Es ist daher ausgeschlossen, daß Rohrscherben unerwünscht doch nach außen in das Erdreich gepreßt werden, was insbesondere beim Erneuern kontaminierter Altrohre eine äußerst umweltschonende Rohr-Sanierung ermöglicht. Vor allem dann, wenn sich beim gleichzeitigen Einziehen einer - im Durchmesser verglichen mit der erdverlegten Rohrleitung sehr viel größeren - Neuleitung ein Ringspalt zwischen dem Hülsenmantel und der erdverlegten Rohrleitung ergibt, kann durch die Öffnungen zwischen den Zertrümmerungswerkzeugen ebenfalls ein Teil des Erdreiches nach innen in den Sammelraum entweichen. Die damit einhergehende geringere Bodenverdrängung wirkt sich einerseits positiv auf die Vortriebsgeschwindigkeit des Vortriebskörpers aus und führt andererseits nicht zu Beschädigungen an im Erdreich möglicherweise benachbart zu der aufgebrochenen Rohrleitung verlegten weiteren Unterflurleitungen.

Zumindest die Schneidkanten der Schneidmesser können sich entweder flügelartig nach hinten erstrecken oder alternativ in Vortriebsrichtung von innen schräg nach vorne verlaufen. Mit den der Rohrleitung zugewandten Schneidkanten läßt sich auf diese Weise die nach innen wirkende Kraftkomponente auch dann einleiten, wenn die Messerblätter der Schneidmesser keine entsprechende Schräglage einnehmen, denn aufgrund der über die Peripherie der erdverlegten Rohrleitung hinausragenden Schneidkanten werden die Rohrscherben nach innen und hinten in den Sammelraum geleitet. Als Zertrümmerungshülse läßt sich deshalb auch ein Schneidmesser aufweisender Aufweitkonus verwenden.

Wenn die Hülsenmanschette einen Innenkegel besitzt, ergibt sich nach dem Aufschieben der Manschette auf den Vortriebskörper eine formschlüssige Verbindung zwischen dem Vortriebskörper und einer korrespondierenden Auflagefläche der Zertrümmerungshülse. Die Hülsenmanschette kann dabei auf eine konische Gehäusespitze oder einen konischen Abschnitt einer rückwärtigen Verdickung des Vortriebskörpers aufgesetzt werden. Als Vortriebskörper eignen sich selbstgetriebene Rammbohrgeräte.

Die Schneidmesser können mit einem in Vortriebsrichtung scherenartig geöffneten, den Mantel der Rohrleitung erfassenden Schneidmaul versehen sein. Hierbei ergibt sich ein zweistückiges, d.h. ein aus zwei Scherblättern bestehendes Schneidmesser, wenn ein am Hülsenmantel und ein an der Hülsenmanschette angeordnetes Schneidmesser das Schneidmaul bilden. Die Schneidkanten der Schneidmesser wirken sowohl von innen als auch von außen auf die Rohrleitung ein.

Wenn das manschettenseitige Schneidmesser mit einer gegenüber der Schneidkante des hülsenmantelseitigen Schneidmessers in Vortriebsrichtung voreilenden Schneidkante versehen ist, wird eine das gezielte, nach hinten gerichtete Abfördern der Rohrscherben begünstigende Leitfunktion erreicht. Denn die voreilende, von innen auf die Rohrleitung einwirkende Schneidkante übernimmt eine die abgebrochenen Rohrscherben in Richtung auf das außenliegende Schneidmesser führende Funktion, so daß die Rohrscherben regelrecht von den Schneidmessern zentriert und gezielt weitergeleitet werden.

Wenn zumindest ein Schneidmesser auf einem Bolzen radial schwenkbeweglich angeordnet ist, empfiehlt es sich, daß das manschettenseitige Schneidmesser beweglich gelagert und von einer Feder in geöffneter Schneidmaul-Stellung gehalten ist. Die bedingt durch Anschläge begrenzt bewegliche Anordnung des von innen an die Rohrleitung angreifenden, federbeaufschlagten Schneidmessers begünstigt den Schereffekt und das Anheben der Rohrscherben zwischen die beiden korrespondierenden gchneidmessern.

Wenn der Rücken des beweglichen Schneidmessers mit einer Schneidkante versehen ist und bei geschlossenem Schneidmaul mit der Schneidkante des korrespondierenden Schneidmessers eine Doppelschneide bildet, lassen sich die beiden Schneidmesser so ein- bzw. anstellen, wobei die das innenliegende Schneidmesser ansonsten niederhaltende Feder außer Kraft gesetzt werden muß, daß beide Schneidmesser von außen auf die Rohrleitung einwirken.

Vorteilhaft kann das rückwärtige Ende des Vortriebskörpers oder der Zertrümmerungshülse über eine Ringaufnahme an eine sich in der Neuleitung erstreckende Arbeitsleitung angekuppelt sein. Die Arbeitsleitung, beispielsweise ein Rohr oder ein Schlauch, dient dann entweder als Schutzrohr für die Abluft der zum Betrieb eines selbstgetriebenen Rammbohrgerätes zugeführte Druckluft oder zur Aufnahme der - gegebenenfalls mit Erdreich vermischten - Rohrscherben, d.h. die Abluft kann stets ungehindert von einem Materialstau abströmen.

Die Erfindung wird nachfolgend anhand von in der Zeichnung dargestellten Ausführungsbeispielen näher erläutert. In der Zeichnung zeigen:
- Fig. 1: eine Gesamtansicht einer Vorrichtung zum Aufbrechen einer erdverlegten Rohrleitung;
- Fig. 2: einen Querschnitt durch die Zertrümmerungshülse entlang der Linie II-II von Fig. 1;
- Fig. 3: eine mit scherenartigen Schneidmessern versehene und an ihrem vorderen Ende eine die Rohrleitung übergreifende Ringaufnahme aufweisende sowie in rückwärtigen Ringaufnahme eine Neuleitung und eine Arbeitsleitung nachziehende Zertrümmerungshülse gemäß den Fig. 1 und 2;
- Fig. 4: eine Zertrümmerungshülse mit einem beweglich gelagerten Schneidmesser, in der Längsansicht;
- Fig. 5: die Zertrümmerungshülse gemäß Fig. 4 entlang der Linie V-V geschnitten;
- Fig. 6: die Zertrümmerungshülse gemäß Fig. 4 mit schräg nach oben angestellten, unterem Schneidmesser;
- Fig. 7: einen über eine starre Stange mit einem Führungsdorn verbundenen Vortriebskörper sowie eine mit einem Innenkegel auf die Spitze des Vortriebsgerätes aufgesetzte Zertrümmerungshülse mit von einer innenliegenden Hülsenmanschette schräg nach vorn zu einem außenliegenden Hülsenmantel verlaufenden Schneidmessern im Längsschnitt;
- Fig. 8: eine mit ihrer Hülsenmanschette auf einen Konus einer rückwärtigen Verdickung des Vortriebskörpers aufgesetzte und mit sich flügelartig nach hinten erstreckenden Schneidblättern versehene Zertrümmerungshülse im Längsschnitt;
- Fig. 9: eine auf einen Konus einer rückwärtigen Verdickung eines außerdem kopfseitig an einen Versorgungsschlauch angeschlossenen Vortriebskörpers aufgesetzte Zertrümmerungshülse mit von innen schräg nach vorne verlaufenden Schneidkanten ihrer Schneidmesser im Längsschnitt;
- Fig. 10: eine Zertrümmerungshülse gemäß Fig. 9 mit rückwärtigen Ringaufnahmen jeweils für eine Neuleitung und eine Arbeitsleitung im Längsschnitt; und
- Fig. 11: eine als Aufweitkonus ausgebildete, mit ihrer Manschette auf einen konischen Abschnitt einer rückwärtigen Verdickung eines Vortriebskörpers aufgesetzte Zertrümmerungshülse im Längsschnitt.

Beim grabenlosen Rohrsanieren durch Aufbrechen einer im Erdreich 1 verlegten, aus einzelnen Rohrstößen 2 mit anschlußseitigen Muffen 3 bestehenden Rohrleitung 4 wird eine aus einer innenliegenden Hülsenmanschette 5 und einem diese mit Abstand konzentrisch umschließenden Hülsenmantel 6 bestehende Zertrümmerungshülse 11 über die Rohrleitung 4 gefahren. Die Zertrümmerungshülse 11 besitzt an ihrem der erdverlegten Rohrleitung 4 zugewandten, vorderen Ende über den Umfang verteilte, ein scherenartiges Schneidmaul 7 bildende Schneidmesser 8, 9 als Zertrümmerungswerkzeuge; sie wird in einer Startgrube 12 fluchtend mit der Rohrleitung 4 in Position gebracht. Die Hülsenmanschette 5 ist mit einem selbstgetriebenen Vortriebskörper 14 formschlüssig verbunden, der über eine an seinem rückwärtigen Ende angeschlossene Versorgungsleitung 13 mit einer nicht dargestellten Druckmittelquelle verbundenen ist.

Der Vortriebskörper 14 ist über ein Zwischenstück 15 formschlüssig mit einem hohlen, in der Rohrleitung 4 gleitenden Führungsdorn 16 verbunden. Der Führungsdorn 16 umschließt eine in Vortriebsrichtung 17 bis in eine Zielgrube 18 verlängerte Zugstange 19 des Zwischenstückes 15. Das in die Zielgrube 18 hineinragende, freie Ende der Zugstange 19 ist mit einem Anschlag 21 versehen, gegen den sich ein mittels Hydraulikzylindern 22 beaufschlagter Stempel 23 einer Presse 24 legt. An der dem Stempel 23 gegenüberliegenden Seite sind die Hydraulikzylinder 22 über eine Strebe 25 abgestützt. Beim Beaufschlagen der Hydraulikzylinder 22 in Vortriebsrichtung 17 wird der Führungsdorn 16 schrittweise vorwärts bewegt und damit die Vorwärtsbewegung des selbstgetriebenen Vortriebskörpers 14 unterstützt. Das Zwischenstück 15 ermöglicht bei erdverlegten Rohrleitungen 4 mit größeren Durchmessern eine Anpassung an den dann entsprechend größer bemessenen Führungsdorn 16, ohne dabei die Verbindung mit dem Vortriebskörper 14 lösen zu müssen.

Die Zertrümmerungshülse 11 besitzt an ihrem rückwärtigen Ende eine als Kupplungsmuffe für eine nachzuziehende Neuleitung 26 ausgebildete äußere Ringaufnahme 27 und eine innere Ringaufnahme 28 für eine konzentrisch in der Neuleitung 26 angeordnete Arbeitsleitung 29. Die Neuleitung 26 ist zwischen der Zertrümmerungshülse 11 und einer über die Arbeitsleitung 29 gleitenden, dem Vortrieb des Vortriebskörpers 14 folgenden Preßplatte 33 eingespannt; die Preßplatte 33 wird von Hydraulikzylindern 32 beaufschlagt, die über eine Strebe 31 in der Startgrube 12 abgestützt sind. Das in die äußere Ringaufnahme 27 der Zertrümmerungshülse 11 eingreifende Ende der Neuleitung 26 stützt sich an Scherblätter 34 der Schneidmesser 8, 9 ab, während sich das in die innere Ringaufnahme 28 der Zertrümmerungshülse 11 eingreifende Ende der Arbeitsleitung 29 hinten gegen den Vortriebskörper 14 legt.

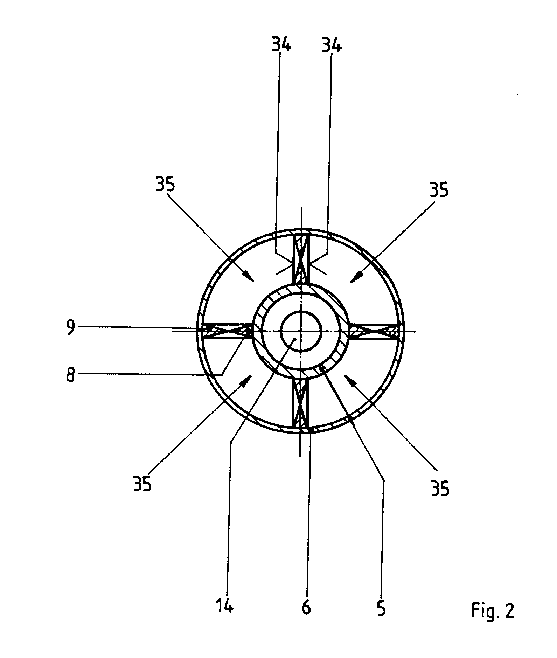

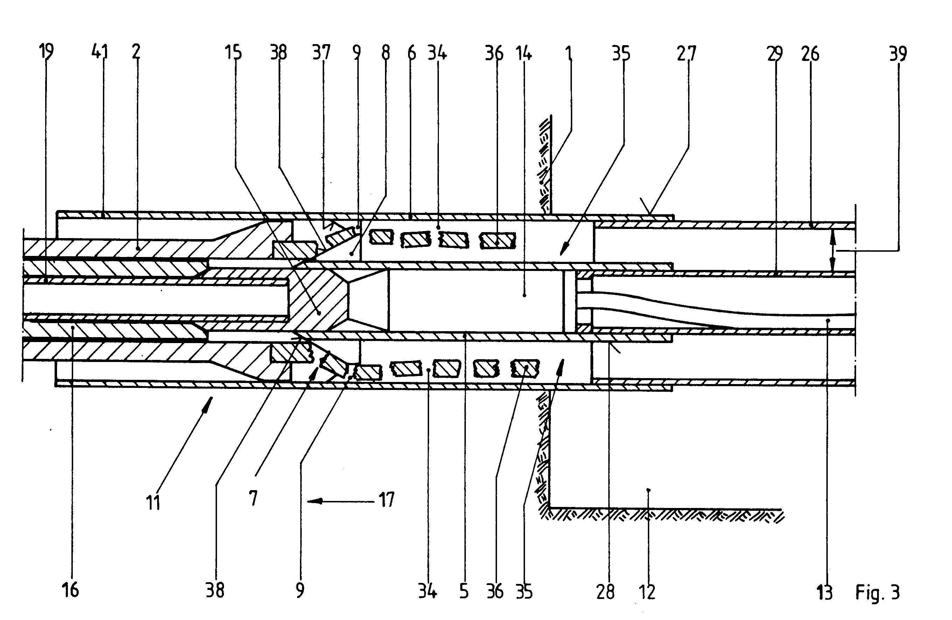

Die Schneidblätter 34 überbrücken den Abstand zwischen dem Hülsenmantel 6 und der Hülsenmanschette 5 der Zertrümmerungshülse 11 strebenartig, wobei zwischen jeweils benachbarten, umfangsverteilt angeordneten Scherblättern 34 bzw. Schneidmessern 8, 9 axiale Durchtrittsöffnungen 35 (vgl. Fig. 2) entstehen. Die Durchtrittsöffnungen 35 werden innen und außen von der Hülsenmanschette 5 bzw. dem Hülsenmantel 6 begrenzt. Beim Zerstören der Rohrstöße 2 der Rohrleitung 4 arbeitet sich die in der Startgrube 12 ausgerichtete Zertrümmerungshülse 11 unter der Kraft des Vortriebskörpers 14 in Vortriebsrichtung 17 zunehmend weiter in das Erdreich 1 hinein, wie in Fig. 3 dargestellt ist. Der Mantel der Rohrstöße 2 wird dabei in zahlreiche Rohrscherben 36 aufgebrochen, sobald die scherenartig angeordneten Schneidmesser 8, 9 mit ihren Schneidkanten 37, 38 auf den Rohrstoß 2 auflaufen. Die Schneidkanten 37 der an dem Hülsenmantel 6 angeordneten Schneidmesser 9 schieben sich dabei von außen über den Rohrstoß 2, und die Schneidkanten 38 der innenliegenden, an der Hülsenmanschette 5 angeordneten Schneidmesser 8 wirken gegen die Innenseite der Rohrleitung 4.

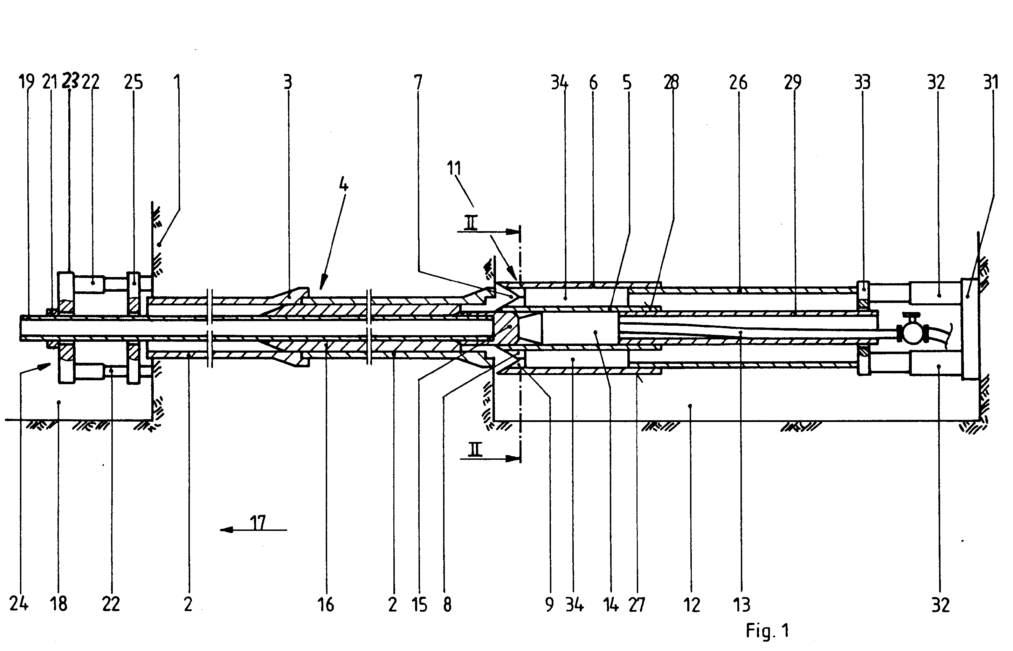

Die Schneidkanten 38 der manschettenseitigen, innenliegenden Schneidmesser 8 sind gegenüber den Schneidkanten 37 der hülsenmantelseitigen, außenliegenden Schneidmesser 9 voreilend ausgebildet, d.h. sie ragen in Vortriebsrichtung 17 weiter vor. Die an die Innenseite des Rohrstoßes 2 angreifenden Schneidkanten 38 wirken somit früher als die außenliegenden Schneidmesser 9 auf den Rohrstoß 2 ein; die Rohrscherben 36 werden in den von den äußeren und inneren Schneidmessern 8, 9 gebildeten Schneidmäulern 7 zentriert und danach über die axialen Durchtrittsöffnungen 35 zwischen den Scherblättern 34 gezielt in einen Sammelraum 39 geleitet. Bei der Ausführung gemäß Fig. 3 wird der Sammelraum 39 von dem Ringspalt zwischen der in den rückwärtigen Ringaufnahmen 27, 28 der Zertrümmerungshülse 11 nachgezogenen Neuleitung 26 und der Arbeitsleitung 29 gebildet. Die Zentrierhülse 11 gemäß Fig. 3 besitzt verglichen mit der in Fig. 1 dargestellten Zentrierhülse eine über die Schneidmesser 8, 9 hinaus nach vorne verlängerte, den Rohrstoß 2 der Rohrleitung 4 weit übergreifende Ringaufnahme 41; die Zentrierhülse 11 bietet dem sich hinten anschließenden Sammelraum 39 somit eine umfangsgeschlossene Abkapselung gegen das Erdreich 1. Die Rohrscherben 36 können damit nicht nach außen ausweichen und gelangen gezielt in den Sammelraum 39.

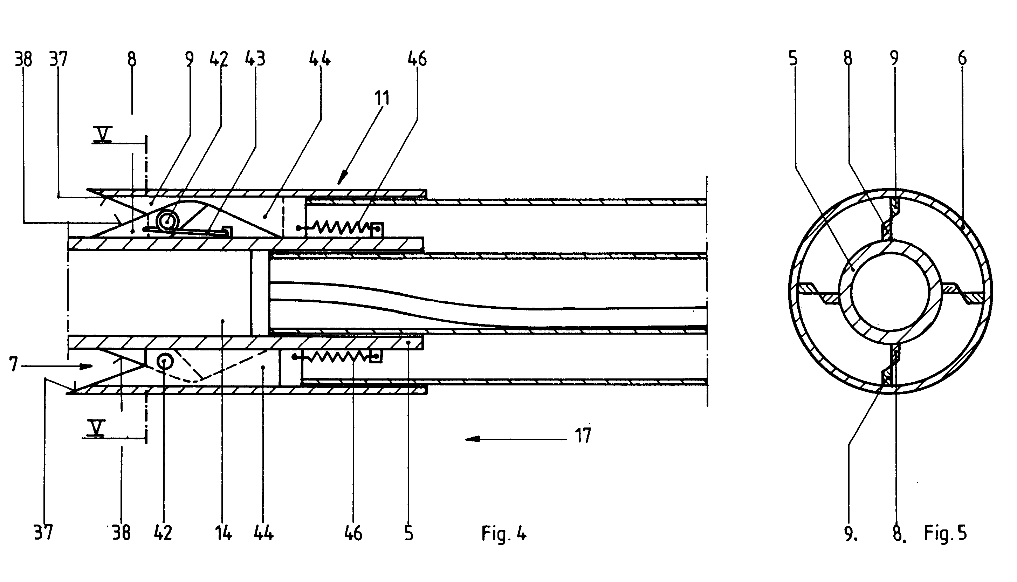

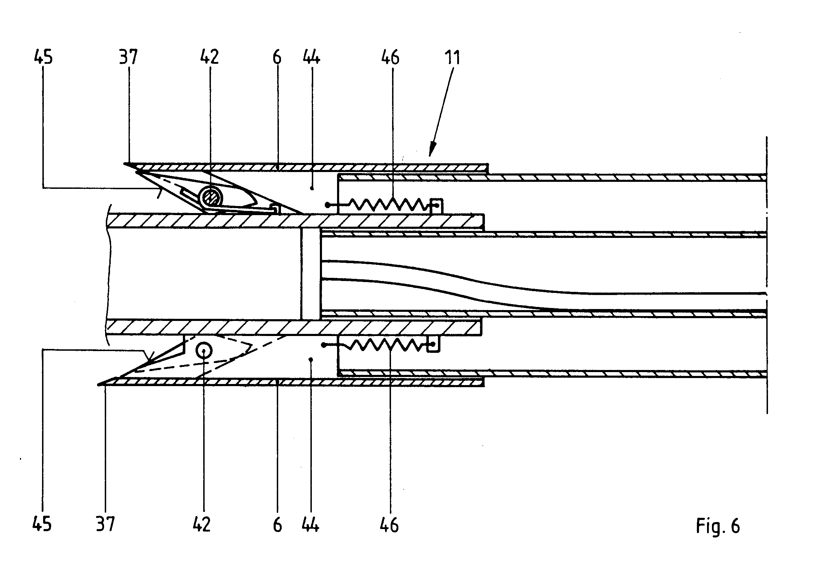

Bei der Ausführung gemäß den Fig. 4 und 5 ist von den beiden, jeweils ein scherenartiges Schneidmaul 7 bildenden Schneidmessern 8, 9 das innenliegende, hülsenmanschettenseitige Schneidmesser 8 auf einem Bolzen 42 schwenkbeweglich gelagert. Die Offenstellung des Schneidmauls 7 wird durch eine Feder 43 erreicht, die das bewegliche Schneidmesser 8 nach unten, in Anlage gegen die auf das Vortriebsgerät 14 aufgesetzte Hülsenmanschette 5 der Zertrümmerungshülse 11 hält. In der geöffneten Stellung schließen die Schneidkanten 37, 38 der Schneidmesser 8, 9 den Mantel des aufzubrechenden Rohrstoßes zwischen sich ein. Dem beweglichen Schneidmesser 8 ist ein längsverschieblicher Stellkeil 44 zugeordnet, der beim Verschieben in Vortriebsrichtung 17 das Schneidmesser 8 gegen die Kraft der Feder 43 um den Bolzen 42 herum in eine das Scherenmaul 7 verschließende, in Fig. 6 dargestellte Lage verschwenkt. Der Rücken des beweglichen Schneidmessers 8 ist bei dieser Ausführung ebenfalls mit einer Schneidkante 45 versehen; in der hochgestellten, d.h. nach außen in Richtung zum Hülsenmantel 6 der Zertrümmerungshülse 11 verschwenkten Lage bilden die Schneidkanten 37, 45 der beiden Schneidmesser 8, 9 eine Doppelschneide, die beim Überfahren der in Fig. 6 nicht dargestellten Rohrstöße 2 der Rohrleitung 4 von außen auf den Rohrstoß 2 einwirken. Der Stellkeil 44 ist mit einer Zugfeder 46 verbunden, die den entlasteten Stellkeil 44 in seine Ausgangslage (vgl. Fig. 4) zurückstellt, in der die an das bewegliche Schneidmesser 8 angreifende Feder 43 das Schneidmaul 7 öffnet bzw. offenhält.

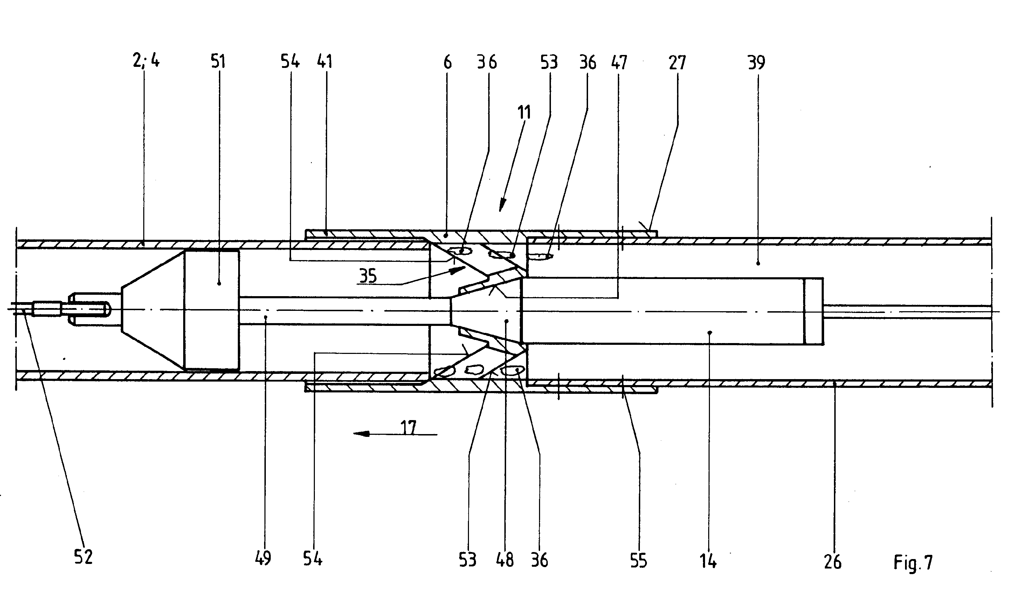

Bei der Zertrümmerungshülse 11 gemäß Fig. 7 besitzt die Hülsenmanschette 5 einen Innenkegel 47, der formschlüssig mit einer korrespondierenden Gerätespitze 48 einer selbstgetriebenen Schlagramme (Vortriebskörper 14) verbunden ist. Die Gerätespitze 48 ist über eine starre Stange 49 mit einem in den Rohrstößen 2 der Rohrleitung 4 gleitenden, über ein angeschlossenes Seil 52 von einer nicht dargestellten Winde gezogenen Führungsdorn 51 verbunden. Die den Abstand zwischen der Hülsenmanschette 5 und dem Hülsenmantel 6 der Zertrümmerungshülse 11 strebenartig überbrückenden Schneidmesser 53 verlaufen in Vortriebsrichtung 17 gesehen von innen schräg nach vorne. Die Schneidmesser 53 werden mit ihren unmittelbar vor der vorderen, den Rohrstoß 2 übergreifenden Ringaufnahme 41 endenden Schneidkanten 54 von außen über den Rohrstoß 2 gefahren; sie bewirken eine nach innen gerichtete Kraftkomponente, die unterstützt, daß die Rohrscherben 36 über die axialen Durchtrittsöffnungen 35 zwischen den Schneidmessern 53 nach hinten in den Sammelraum 39 gelangen. Dieser wird hier von der in der rückwärtigen Ringaufnahme 27 der Zertrümmerungshülse 11 mittels Schrauben 55 lösbar befestigten, dem Vortriebskörper 14 folgenden Neuleitung 26 gebildet.

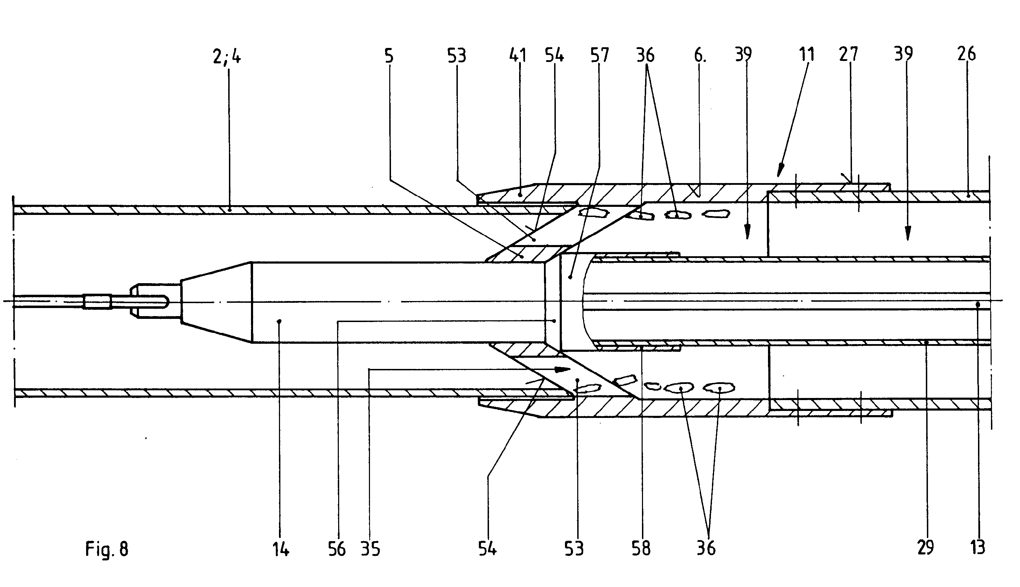

Bei der Zertrümmerungshülse 11 gemäß Fig. 8 erstrecken sich die Schneidmesser 53 flügelartig nach hinten, und die Hülsenmanschette 5 ist über einen konischen Abschnitt formschlüssig mit einem Konus 56 einer rückwärtigen Verdickung 57 der Schlagramme 14 verbunden. Die nachgezogene Neuleitung 26 nimmt konzentrisch die in eine rückwärtige Ringaufnahme 58 der Schlagramme 14 eingreifende Arbeitsleitung 29 auf. Durch die Arbeitsleitung 29 verläuft die Versorgungsleitung 13, und durch die Arbeitsleitung 29 wird auch die Abluft der Schlagramme 14 ungehindert von den Rohrscherben 36 zurückgeführt. Die den Rohrstoß 2 der Rohrleitung 4 übergreifende Ringaufnahme 41 der Zertrümmerungshülse 11 bildet mit den Schneidmessern 53 bzw. deren Schneidkanten 54 einen spitzen, das Rohrstoßende einschließenden und zentrierenden Winkel; die Rohrscherben 36 werden niedergehalten und gelangen über die axialen Durchtrittsöffnungen 35 in den hinter den Schneidmessern 53 liegenden, gegen das Erdreich umfangsgeschlossenen Sammelraum 39, der hier von dem Ringspalt zwischen dem Hülsenmantel 6 und der Arbeitsleitung 29 sowie dem Ringspalt zwischen der Neuleitung 26 und der Arbeitsleitung 29 gebildet wird.

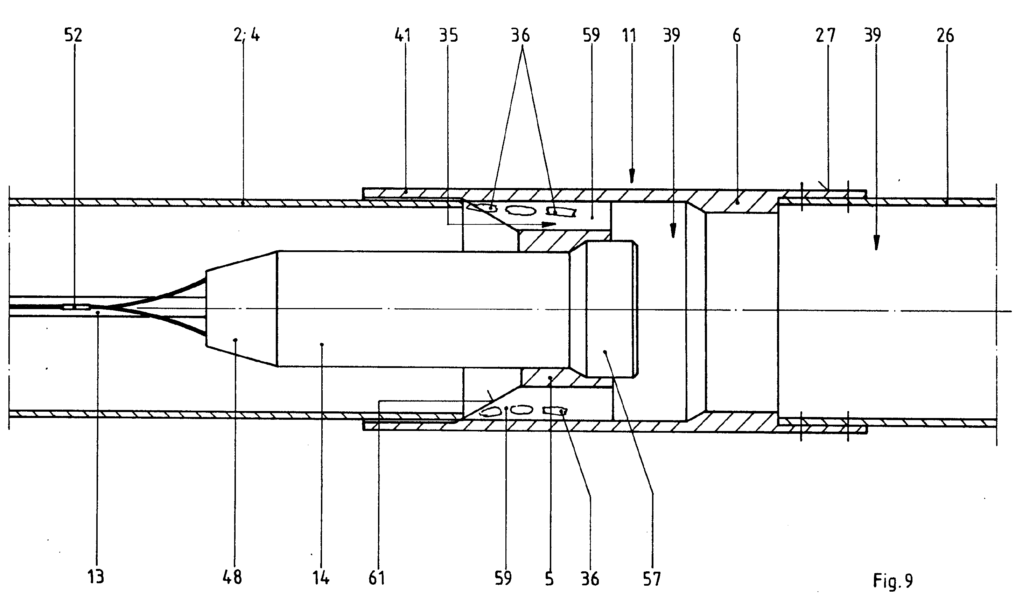

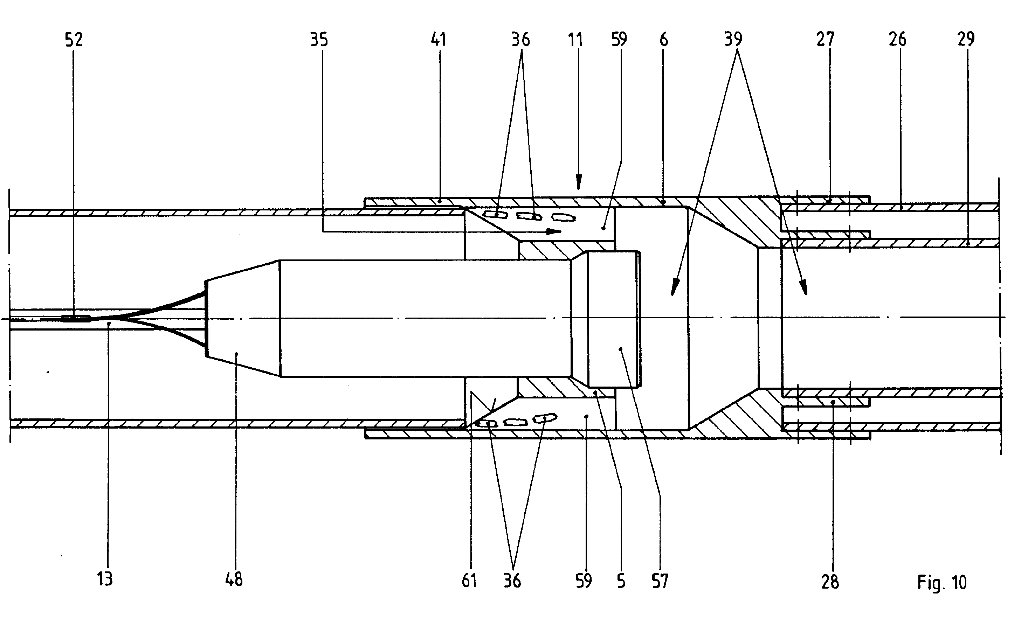

Bei den Ausführungen gemäß den Fig. 9 und 10 wird die Schlagramme 14 von vorne mit Druckluft versorgt, d.h. eine Versorgungsleitung 60 ist mit der Gerätespitze 48 verbunden. Benachbart zu der Versorgungsleitung 60 ist das von einer nicht dargestellten Winde beaufschlagte, den Vortrieb durch Ziehen unterstützende Zugseil 52 befestigt. Auf die rückwärtige Verdickung 57 ist die Hülsenmanschette 5 der Zertrümmerungshülse 11 aufgesetzt. Die Schneidmesser 59 besitzen in Vortriebsrichtung von innen schräg nach vorne verlaufende Schneidkanten 61, die über die Peripherie des Rohrstoßes 2 bzw. der Rohrleitung 4 hinausragen und hinter der vorderen Ringaufnahme 41 der Zertrümmerungshülse 11 enden. Die unter der Kraft der Schneidmesser 59 - die mit ihrem wirksamen Schneidenbereich von außen auf den Rohrstoß 2 einwirkende Schneidkanten 61 besitzen - herausgebrochenen Rohrscherben 36 werden über die axialen Durchtrittsöffnungen 35 zwischen den Schneidmessern 59 nach innen und hinten in den Sammelraum 39 abgefördert. Bei der Ausführung gemäß Fig. 9 wird der Sammelraum 39 von dem hinter den Schneidmessern 59 liegenden Ringraum des Hülsenmantels 6 und der in der rückwärtigen Ringaufnahme 27 angekuppelten Neuleitung 26 gebildet.

Die Zertrümmerungshülse 11 gemäß Fig. 10 weist an ihrem rückwärtigen Ende eine äußere und eine innere Ringaufnahme 27, 28 auf, wobei die Neuleitung 26 mit der äußeren Ringaufnahme 27 und die Arbeitsleitung 29 mit der inneren Ringaufnahme 28 verbunden ist. Den Sammelraum 39 für die Rohrscherben 36 bilden hierbei der hinter den Schneidmessern 59 liegende Ringraum des Hülsenmantels 6 und die Arbeitsleitung 29; die Rohrscherben 36 haben somit keine Gelegenheit, an die Innenseite der Neuleitung 26 zu gelangen.

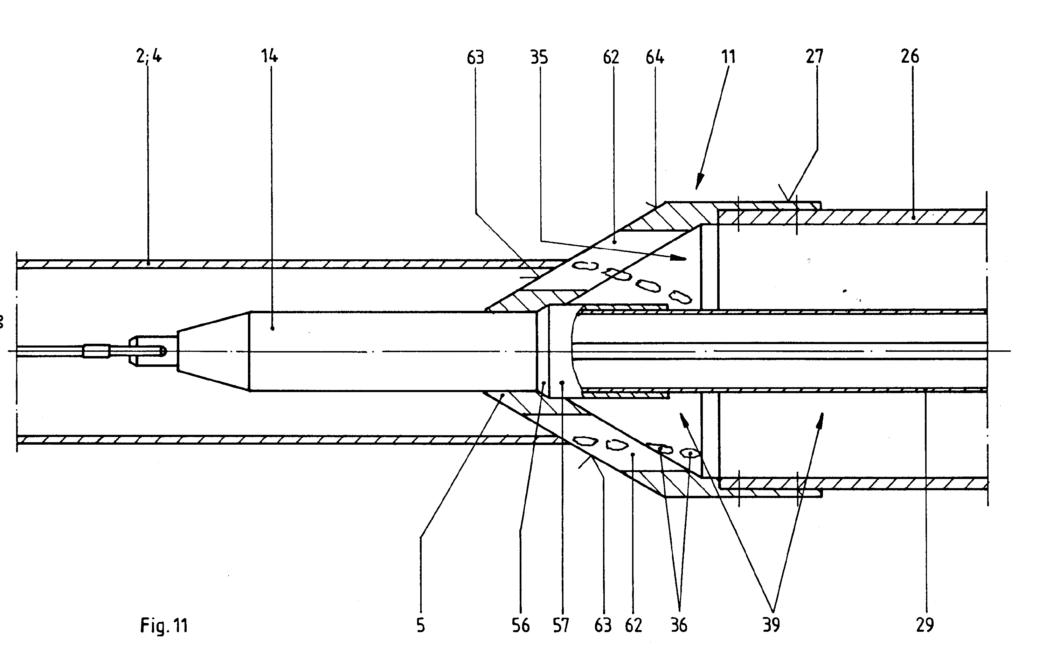

Bei der Ausführung gemäß Fig. 11 ist die Zertrümmerungshülse 11 als Aufweitkonus 64 ausgebildet, wobei die Schneidmesser 62 in dem konischen Abschnitt der Zertrümmerungshülse 11 angeordnet sind und flügelartig nach hinten verlaufen. Die Hülsenmanschette 5 der Zertrümmerungshülse 11 ist auf einen Konus 56 der rückwärtigen Verdickung 59 der Schlagramme 14 aufgesetzt. Die gegen den Rohrstoß 2 bzw. die Rohrleitung 4 gefahrenen Schneidkanten 63 zerbrechen die Leitung in Rohrscherben 36. Die Rohrscherben 36 gelangen durch die axialen Durchtrittsöffnungen 35 zwischen den Schneidmessern 62 in den hinter den Schneidmessern 62 liegenden Sammelraum 39; dieser besteht aus dem konischen Innenraum der Zentrierhülse 11 und dem zwischen der in der rückseitigen Ringaufnahme 27 der Zertrümmerungshülse 11 angekuppelten Neuleitung 26 und der von der Schlagramme 14 aufgenommenen Arbeitsleitung 29 gebildeten Ringspalt. Wie bei allen Ausführungen werden aufgrund des gegen das Erdreich umfangsgeschlossenen, hinter den Schneidmessern der Zertrümmerungshülse liegenden Sammelraums die zentripetal nach innen und hinten abgeförderten Rohrscherben 36 gesammelt und entnommen; die Rohrscherben können nicht in das umgebende Erdreich eindringen.

## Patentansprüche

1. Vorrichtung zum Zerstören einer erdverlegten Rohrleitung mittels eines
- mit einem Vortriebskörper (14) verbundenen Schneidwerkzeugs (8,9;53;59;62) mit
- winklig in bezug auf die Rohrachse verlaufenden Schneiden (37,38;45;54;61,63) und
- zwischen den Schneiden befindlichen Durchtrittsöffnungen (35) zu einem
- in Vortriebsrichtung hinter den Schneiden beginnenden peripheren Sammelraum (39).

2. Vorrichtung nach Anspruch 1, dadurch gekennzeichnet, daß eine mit dem Vortriebskörper (14) verbundene Hülse (11) mit den Zertrümmerungswerkzeugen (8,9;53;59;62) versehen ist.

3. Vorrichtung nach Anspruch 1 oder 2, dadurch gekennzeichnet, daß sich die Zertrümmerungswerkzeuge (8,9;53;59;62) ausgehend von einem außerhalb der Peripherie der Rohrleitung (4) verlaufenden Hülsenmantel (6) radial nach innen erstrecken.

4. Vorrichtung nach Anspruch 2 oder 3, dadurch gekennzeichnet, daß die Zertrümmerungswerkzeuge (8,9;53;59;62) mit ihren innenliegenden Enden an einer Hülsenmanschette (5) angeordnet sind.

5. Vorrichtung nach einem oder mehreren der Ansprüche 2 bis 4, gekennzeichnet durch axiale Durchtrittsöffnungen (35) zwischen den Zertrümmerungswerkzeugen (8,9;53;59;62).

6. Vorrichtung nach einem oder mehreren der Ansprüche 1 bis 5, gekennzeichnet durch den Abstand zwischen dem Hülsenmantel (6) und der Hülsenmanschette (5) strebenartig überbrückende Schneidmesser (53,62).

7. Vorrichtung nach Anspruch 6, dadurch gekennzeichnet, daß sich zumindest die Schneidkanten (54,63) der Schneidmesser (53,62) flügelartig nach hinten erstrecken.

8. Vorrichtung nach Anspruch 6 oder 7, gekennzeichnet durch einen Schneidmesser (62) aufweisenden Aufweitkonus (64) als Zertrümmerungshülse (11).

9. Vorrichtung nach Anspruch 6, dadurch gekennzeichnet, daß zumindest die Schneidkanten (54,61) der Schneidmesser (53,59) von innen in Vortriebsrichtung (14) gesehen schräg nach vorne verlaufen.

10. Vorrichtung nach einem oder mehreren der Ansprüche 1 bis 9, dadurch gekennzeichnet, daß dem Vortriebskörper (14) ein zugbeaufschlagter Führungsdorn (16,51) vorgeschaltet ist.

11. Vorrichtung nach einem oder mehreren der Ansprüche 1 bis 10, gekennzeichnet durch eine Hülsenmanschette (5) mit einem Innenkegel (47).

12. Vorrichtung nach einem oder mehreren der Ansprüche 1 bis 7, dadurch gekennzeichnet, daß die Schneidmesser (8,9) mit einem in Vortriebsrichtung (17) scherenartig geöffneten, den Mantel der Rohrleitung (4) erfassenden Schneidmaul (7) ausgebildet sind.

13. Vorrichtung nach Anspruch 12, dadurch gekennzeichnet, daß ein am Hülsenmantel (6) und ein an der Hülsenmanschette (5) angeordnetes Schneidmesser (8,9) das Schneidmaul (7) bilden.

14. Vorrichtung nach Anspruch 13, dadurch gekennzeichnet, daß das manschettenseitige Schneidmesser (8) mit einer gegenüber der Schneidkante (37) des hülsenmantelseitigen Schneidmessers (9) in Vortriebsrichtung (17) voreilenden Schneidkante (38) versehen ist.

15. Vorrichtung nach Anspruch 13 oder 14, gekennzeichnet durch zumindest ein bewegliches Schneidmesser (8,9).

16. Vorrichtung nach Anspruch 15, dadurch gekennzeichnet, daß das manschettenseitige Schneidmesser (8) beweglich gelagert und von einer Feder (43) in geöffneter Stellung des Schneidmauls (7) gehalten wird.

17. Vorrichtung nach Anspruch 15 oder 16, dadurch gekennzeichnet, daß der Rücken des beweglichen Schneidmessers (8) mit einer Schneidkante (45) versehen ist und bei geschlossenem Schneidmaul (7) mit der Schneidkante (37) des korrespondierenden Schneidmessers (9) eine Doppelschneide (45,47) bildet.

18. Vorrichtung nach einem oder mehreren der Ansprüche 1 bis 17, dadurch gekennzeichnet, daß die Zertrümmerungshülse (11) an ihrem rückwärtigen Ende mit zumindest einer Ringaufnahme (27,28) versehen ist.

19. Vorrichtung nach Anspruch 18, dadurch gekennzeichnet, daß eine äußere, rückwärtige Ringaufnahme (27) als Kupplungsmuffe für ein Leitungsrohr (26) ausgebildet ist und eine vordere, über die Schneidkanten hinaus vorkragende Ringaufnahme (41) die Rohrleitung (4) übergreift.

20. Vorrichtung nach Anspruch 18 oder 19, dadurch gekennzeichnet, daß am rückwärtigen Ende des Vortriebskörpers (14) oder der Zertrümmerungshülse (11) eine Arbeitsleitung (29) angekuppelt ist.

21. Vorrichtung nach einem oder mehreren der Ansprüche 1 bis 20, dadurch gekennzeichnet, daß die Zertrümmerungshülse (11) zusammen mit dem über die rückwärtige Ringaufnahme (27) angekuppelten Leitungsrohr (26) oder die angekuppelte Arbeitsleitung (29) einen gegen das Erdreich (1) abgekapselten, die Rohrscherben (36) aufnehmenden Sammelraum (39) bildet.

22. Vorrichtung nach einem oder mehreren der Ansprüche 1 bis 21, gekennzeichnet durch ein selbstgetriebenes Rammbohrgerät mit einer kopfseitigen Versorgungsleitung (60).

23. Vorrichtung nach einem oder mehreren der Ansprüche 1 bis 22, dadurch gekennzeichnet, daß das eine Leitungsrohr (26) zwischen der Zertrümmerungshülse (11) und einer Preßplatte (33) eingespannt ist.

## Claims

1. Apparatus for destroying an underground pipeline by means of
- a cutting tool (8, 9; 53; 59, 62) connected to a driving unit (14) and having
- cutters (37, 38; 45; 54; 61, 63) running at an angle to the axis of the pipe and
- passages (35) between the cutters leading to a
- peripheral collecting chamber (39) beginning behind the cutters.

2. Apparatus according to claim 1, characterised in that a sleeve (11) connected to the driving unit (14) is provided with the disintegrating tools (8, 9; 53; 59; 62).

3. Apparatus according to claim 1 or claim 2, characterised in that the disintegrating tools (8, 9; 53; 59; 62) extend radially inwards starting from a sleeve shell (6) running outside the periphery of the pipeline (4).

4. Apparatus according to claim 2 or claim 3, characterised in that the disintegrating tools (8, 9; 53; 59; 62) are arranged with their inner ends on a sleeve cuff (5).

5. Apparatus according to one or more of claims 2 to 4, characterised by axial-passages (35) between the disintegrating tools (8, 9; 53; 59; 62).

6. Apparatus according to one or more of claims 1 to 5, characterised by knives (53, 62) bridging the gap between the sleeve shell (6) and the sleeve cuff (5) like struts.

7. Apparatus according to claim 6, characterised in that at least the cutting edges (54, 63) of the knives (53, 62) extend backwards as wings.

8. Apparatus according to claim 6 or claim 7, characterised by having as disintegrating sleeve (11) a widening-out cone (64) with knives (62).

9. Apparatus according to claim 6, characterised in that at least the cutting edges (54, 61) of the knives (53, 59) are inclined forward from inside when viewed in the driving direction (14).

10. Apparatus according to one or more of claims 1 to 9, characterised in that a guide mandrel (16, 51) to which traction is applied is connected in front of the driving unit (14).

11. Apparatus according to one or more of claims 1 to 10, characterised by a sleeve cuff (5) having an inner cone (47).

12. Apparatus according to one or more of claims 1 to 7, characterised in that the knives (8, 9) are formed with cutter jaws (7) open like shears in the driving direction (17) and fitting over the wall of the pipeline (4).

13. Apparatus according to claim 12, characterised in that the cutter jaws (7) are formed by a knife (8, 9) on the sleeve shell (6) and one on the sleeve cuff (5).

14. Apparatus according to claim 13, characterised in that the knife (8) on the cuff side is provided with a cutting edge (38) that leads in the driving direction (17) relative to the cutting edge (37) of the knife (9) on the sleeve shell side.

15. Apparatus according to claim 13 or claim 14, characterised by at least one movable knife (8, 9).

16. Apparatus according to claim 15, characterised in that the knife (8) on the cuff side is movably mounted and is held in the open position of the cutter jaws (7) by a spring (43).

17. Apparatus according to claim 15 or claim 16, characterised in that the back of the movable knife (8) is provided with a cutting edge (45) and, when the cutter jaws (7) are closed, forms a double cutter (45, 47) with the cutting edge (37) of the corresponding knife (9).

18. Apparatus according to one or more of claims 1 to 17, characterised in that the disintegrating sleeve (11) is provided at its rear end with at least one annular socket (27, 28).

19. Apparatus according to claim 18, characterised in that an outer rear annular socket (27) is formed as a coupling muff for a line pipe (26) and a front annular socket (41) projecting beyond the cutting edges overlaps the pipeline (4).

20. Apparatus according to claim 18 or claim 19, characterised in that a working line (29) is coupled on to the rear end of the driving unit (14) or of the disintegrating sleeve (11).

21. Apparatus according to one or more of claims 1 to 20, characterised in that the disintegrating sleeve (11) together with the line pipe (26) coupled on via the rear annular socket (27) or the coupled-on working line (29) form a collecting chamber (39), sealed off from the ground (1), to receive the pipe fragments (36).

22. Apparatus according to one or more of claims 1 to 21, characterised by a self-propelled percussion boring machine having a supply line (60) at its head end.

23. Apparatus according to one or more of claims 1 to 22, characterised in that one line pipe (26) is held between the disintegrating sleeve (11) and a press platen (33).

## Revendications

1. Dispositif pour la destruction d'une conduite enterrée au moyen
- d'un outil tranchant (8;9;53;59;62) associé à un élément propulseur (14), dont
- les tranchants (37;38;45;54;61;63) s'étendent de façon inclinée par rapport à l'axe de la conduite,
- des ouvertures de passage (35) étant agencées entre les tranchants pour
- le passage dans une chambre collectrice périphérique (39) agencée derrière les tranchants, vu dans le sens d'avancement.

2. Dispositif selon la revendication 1 caractérisé en ce qu'une douille (11) reliée à l'élément propulseur (14) est munie des outils de destruction (8;9;53;59;62).

3. Dispositif selon la revendication 1 ou 2 caractérisé en ce que les outils de destruction (8;9;53;59;62) s'étendent radialement vers l'intérieur en partant d'une enveloppe de douille (6) qui s'étend à l'extérieur de la périphérie de la conduite (4).

4. Dispositif selon la revendication 2 ou 3 caractérisé en ce que les extrémités internes des outils de destruction (8;9;53;59;62) sont agencées à un manchon de douille (5).

5. Dispositif selon l'une ou plusieurs des revendications 2 à 4 caractérisé par des ouvertures de passage axiales (35) agencées entre les outils de destruction (8;9;53;59;62).

6. Dispositif selon l'une ou plusieurs des revendications 1 à 5 caractérisé par des couteaux tranchants (53;62) qui pontent la distance comprise entre l'enveloppe de douille (6) et le manchon de douille (5) à la manière de nervures.

7. Dispositif selon la revendication 6 caractérisé en ce qu'au moins les arêtes tranchantes (54,63) des couteaux tranchants (53;62) s'étendent vers l'arrière à la façon d'ailettes.

8. Dispositif selon la revendication 6 ou 7 caractérisé en ce que la douille de destruction (11) consiste en un cone d'élargissement (64) muni de couteaux tranchants (62).

9. Dispositif selon la revendication 6 caractérisé en ce qu'au moins, les arêtes tranchantes (54, 61) des couteaux tranchants (53, 59) s'étendent de l'intérieur vers l'avant de façon inclinée, vu dans le sens d'avancement (14).

10. Dispositif selon l'une ou plusieurs revendications 1 à 9 caractérisé en ce qu'une broche de guidage (16,51) sollicitée en traction est montée à l'avant de l'élément propulseur (14).

11. Dispositif solon l'une ou plusieurs des revendications 1 à 10 caractérisé en ce que le manchon de douille (5) comporte un cone intérieur (47).

12. Dispositif selon l'une ou plusieurs des revendications 1 à 7 caractérisé en ce que les couteaux tranchants (8,9) sont équipés d'un entrebaillement (7) ouvert à la façon de ciseaux, vu dans le sens d'avancement (17), qui saisit l'enveloppe de la conduite (4).

13. Dispositif selon la revendication 12 caractérisé en ce que l'entrebaillement (7) est formé par un couteau tranchant (8,9) agencé à l'enveloppe de douille (6) et au manchon de douille (5).

14. Dispositif selon la revendication 13 caractérisé en ce que le couteau (8) agencé du côté du manchon comporte une arête tranchante (38) avancée par rapport à l'arête tranchante (37) du couteau (9) agencé du côté de l'enveloppe de douille, vu dans le sens d'avancement (17).

15. Dispositif selon la revendication 13 ou 14 caractérisé par au moins un couteau mobile (8,9).

16. Dispositif selon la revendication 15 caractérisé en ce que le couteau (8) agencé du côté du manchon est logé de façon mobile et est maintenu dans la position d'entrebaillement ouverte (7) par un ressort (43).

17. Dispositif selon la revendication 15 ou 16 caractérisé en ce que le dos du couteau mobile (8) est muni d'une arête tranchante (45) et constitue, en position d'entrebaillement (7) fermée, avec l'arête tranchante (37) du couteau correspondant (8), une lame à double tranchant (45,47).

18. Dispositif selon l'une ou plusieurs des revendications 1 à 17 caractérisé en ce que la douille de destruction (11) comporte, à son extrémité arrière un logement annulaire (27,28).

19. Dispositif selon la revendication 18 caractérisé en ce qu'un logement annulaire arrière extérieure (27) se présente comme un manchon de raccordement pour une conduite (26), et en ce qu'un logement annulaire avant (41) qui fait saillie sur les arêtes tranchantes enveloppe la conduite (4).

20. Dispositif selon la revendication 18 ou 19 caractérisé en ce qu'un conduit (29) est raccordé à l'éxtrémité arrière de l'élément propulseur (14) ou de la douille de destruction (11).

21. Dispositif selon l'une ou plusieurs des revendications 1 à 20 caractérisé en ce que la douille de destruction (11) en association avec la conduite (26) raccordée par l'intermédiaire du logement annulaire arrière (27), ou avec le conduit raccordé (29) constitue une chambre collectrice (39) isolée du sol (1) et collectant les débris de conduite (36).

22. Dispositif selon l'une ou plusieurs des revendications 1 à 21 caractérisé par un mouton de forage auto-propulsé équipé d'une conduite d'alimentation (60) avant.

23. Dispositif selon l'une ou plusieurs des revendications 1 à 22 caractérisé en ce que la conduite (26) est serrée entre la douille de destruction (11) et une plaque de serrage (33).
